(19) Europäisches Patentamt
European Patent Office
Office européen des brevets

(11) Veröffentlichungsnummer: **0 176 013**
**B1**

(12) # EUROPÄISCHE PATENTSCHRIFT

(45) Veröffentlichungstag der Patentschrift: **14.11.90**

(51) Int. Cl.[5]: **C 08 G 18/08**, C 08 G 18/18

(21) Anmeldenummer: **85111580.8**

(22) Anmeldetag: **13.09.85**

(54) **Verfahren zur Herstellung von geschäumten Polyurethanen, die mit einem anderen Werkstoff verbunden oder konfektioniert worden sind.**

(30) Priorität: **25.09.84 DE 3435070**

(43) Veröffentlichungstag der Anmeldung:
**02.04.86 Patentblatt 86/14**

(45) Bekanntmachung des Hinweises auf die Patenterteilung:
**14.11.90 Patentblatt 90/46**

(84) Benannte Vertragsstaaten:
**AT BE CH DE FR GB IT LI NL SE**

(56) Entgegenhaltungen:
**LU-A- 68 441**
**US-A-4 094 827**

(73) Patentinhaber: **BAYER AG**
**D-5090 Leverkusen 1 Bayerwerk (DE)**

(72) Erfinder: **Haas, Peter, Dr.**
**Zwengenbergerstrasse 43**
**D-5657 Haan 1 (DE)**
Erfinder: **Freitag, Hans-Albrecht, Dr.**
**c/o 162 River Crest**
**Dr. Coraopolis, PA 15108 (US)**
Erfinder: **Avar, Geza, Dr.**
**Bamberger Strasse 1**
**D-5090 Leverkusen 1 (DE)**
Erfinder: **Sommerfeld, Claus-Dieter, Dr.**
**Oberdreisbach Höhe 42**
**D-5203 Much (DE)**
Erfinder: **Illger, Hans-Walter, Dr.**
**Im Tentefeld 27**
**D-5064 Rösrath (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 176 013 B1

**Beschreibung**

Die Herstellung von Polyurethanen unter Verwendung von Katalysatoren der unterschiedlichsten Art ist bekannt. Bei der Herstellung von Polyurethan-Verbundmaterialien und konfektionierten Polyurethankunststoffen z.B. aus Polyurethanschaumstoffen und Deckmaterialien aus gefärbten Polyvinylchlorid- sowie ABS-Folien oder textilen Deckschichten aus Baumwolle und Leder hat sich nun aber oft gezeigt, daß die Katalysatoren diffusionsbedingte Schädigungen der Deckmaterialien bewirken.

Aus dem Bereich der Möbelindustrie ist bekannt, daß an Sitzmöbeln mit Formschaumteilen und lackiertem Sichtholz besonders in wärmeren Jahreszeiten merkliche Lackschäden auftreten können.

Als von großen Nachteil sind in diesem Zusammenhang Erweichung und Verfärbung von Nitrocelluloselacken an den genannten Flächen zu registrieren; desweiteren ist eine Vergilbung von Leder und hellen Textilien, besonders auf Basis von Baumwolle, bekannt.

Für den Bereich hinterschäumter Folien auf Basis PVC und ABS sind durch Aussonderung der Aktivatoren bedingte, deutliche Farbveränderungen der Abdeck- und Verkleidungsmaterialien beobachtet worden, die sich dann in einer intensiven Dunkel- bis Schwarzverfärbung auch ehemals heller Folien zeigen.

Die Aufgabe der vorliegenden Erfindung bestand nun darin, Katalysatoren aufzufinden, die auch bei thermischer Belastung von Polyurethanschaumstoff-Verbundmaterialien und konfektionierten Polyurethanschaumstoffen

1. keine Neigung zu Diffusionseffekten zeigen und daher
2. direkte Kontaktverfärbungen an Deckmaterialien und auch
3. indirekte, durch weitergehende Aussonderung der Katalysatoren bedingte Farb- und Konstitutionsveränderungen an Begleitwerkstoffen verhindern.

Diese Aufgabe wird mit den erfindungsgemäß zu verwendenden Katalysatoren gelöst.

Gegenstand der Erfindung ist ein Verfahren zur Herstellung von Polyurethanformschaumstoffen, die in direktem Oberflächenkontakt mit einem weiteren Werkstoff stehen, durch Umsetzung von mindestens zwei gegenüber Isocyanaten reaktionsfähige Wasserstoffatome aufweisenden Verbindungen vom Molekulargewicht 400—10 000 mit Polyisocyanaten in Gegenwart von tertiäre Aminogruppen aufweisenden Katalysatoren sowie Wasser und/oder organischen Treibmitteln und gegebenenfalls in Gegenwart von Kettenverlängerungsmitteln vom Molekulargewicht 32—400, Schaumstabilisatoren und weiteren Hilfs- und Zusatzmitteln in einer geschlossenen Form und Verbindung oder Konfektionierung des erhaltenen Polyurethanschaumstoffs mit einem weiteren Werkstoff, dadurch gekennzeichnet, daß man als Katalysatoren Aminoalkylharnstoffe der allgemeinen Formel

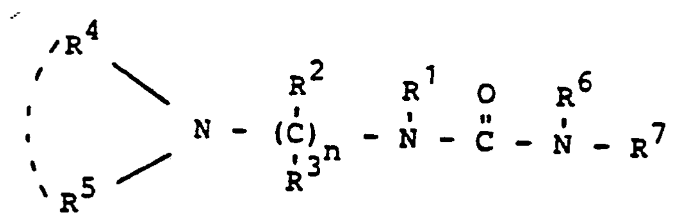

in der

$R^1$ Wasserstoff

n eine ganze Zahl zwischen 2 und 6,

$R^2$, $R^3$ Wasserstoff oder einen $C_1$—$C_6$-Alkylrest,

$R^4$, $R^5$ einen $C_1$—$C_6$-Alkylrest, oder zusammen einen $C_2$—$C_6$-Alkylenrest, der Heteroatome wie 0 oder $>$ NR (R = Alkyl) enthalten kann,

$R^6$, $R^7$ gleich oder verschieden sind und Wasserstoff oder den Rest

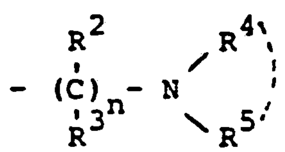

bedeuten, verwendet, wobei die Verbindung des Polyurethanschaumstoffs mit einem weiteren Werkstoff nach der Hinterfüllungstechnik erfolgt und im Falle einer Konfektionierung der Polyurethanschaumstoff mit einem Überzug aus Leder oder Textilien versehen wird.

Vorzugsweise werden als andere Werkstoffe PVC, ABS, Mischungen aus PVC, ABS, Polyvinylacetat, Polyvinylbutyral, ferner Co- und Homopolymerisate auf der Basis von Vinylchlorid, Styrol, Butadien, Isopren, Chloropren, Dichlorbutadien, Ethylen, Propen oder Acrylnitril und deren Chlor- und Chlorsulfonierungsderivate in Form von Folien, Textilien auf der Basis von Baumwolle oder Leder verwendet.

Vorzugsweise bedeutet in der obengenannten allgemeinen Formel:
$R^2$, $R^3$, $R^6$, $R^7$ Wasserstoff,
$R^4$, $R^5$ Methyl,
n = 2,3.

Einige der erfindungsgemäß zu verwendenden Harnstoffe sind bereits als Katalysatoren für die Herstellung von Polyurethanen beschrieben worden (DE—OS 2 354 952, US—PS 4 094 827, US—PS 4 194 069). Der überraschende Befund, daß die erfindungsgemäß zu verwendenden Harnstoffe eine Verhinderung von Kontaktverfärbungen an der Grenzfläche des Polyurethanschaums zu Deckmaterialien wie PVC, ABS oder Textilien oder Leder oder von Schädigungen von zum Polyurethan angrenzenden Lackflächen bei Polyurethanschaum-Verbundmaterialien und von konfektionierten Polyurethanschaumstoffen bewirkt, war indessen bisher nicht bekannt.

Die erfindungsgemäß zu verwendenden Harnstoffe sind bei Raumtemperatur mittelviskose, wasserhelle Flüssigkeiten von ganz geringem Eigengeruch, der selbst in heißen Schaumstoffen nicht bemerkt wird. Die Harnstoffe werden in der Regel in einer Menge von 0,1 bis 10 Gew.-Teilen, bevorzugt 0,5 bis 5 Gew.-Teilen, gegebenenfalls auch in Abmischungen miteinander, bezogen auf 100 Gew.-Teile der mindestens zwei gegenüber Isocyanaten reaktionsfähige Wasserstoffatome aufweisenden Verbindungen, verwendet.

Als Beispiele für erfindungsgemäß zu verwendende Harnstoffe seien genannt:

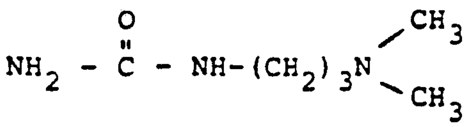
besonders bevorzugt

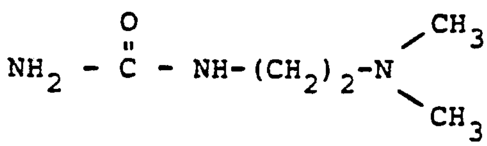
besonders bevorzugt

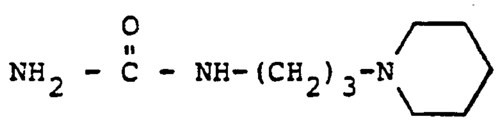

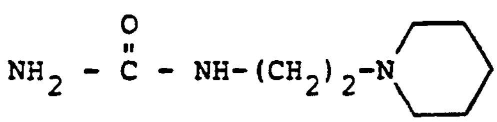

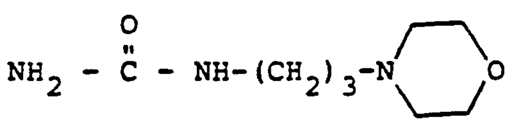

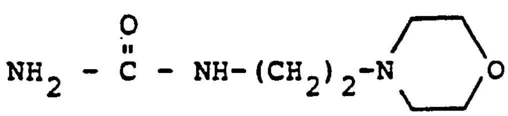

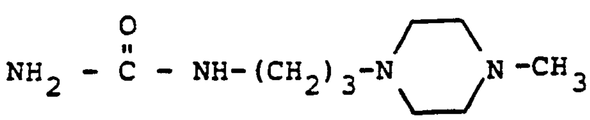

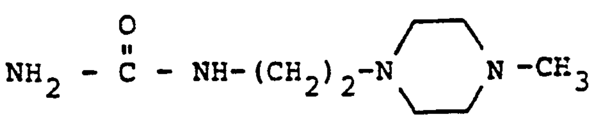

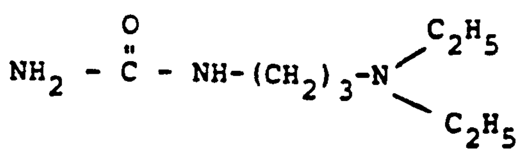
besonders bevorzugt

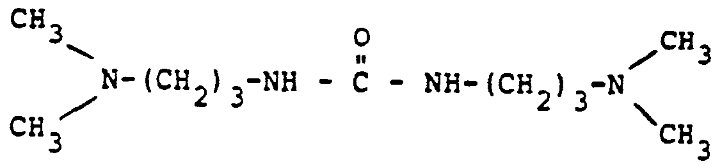 bevorzugt

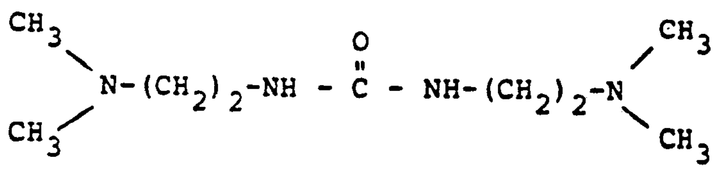 bevorzugt

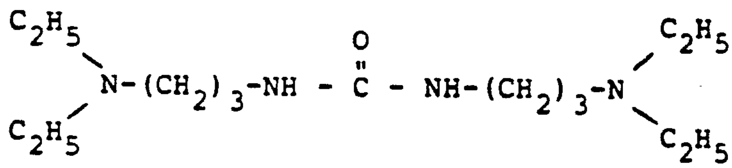

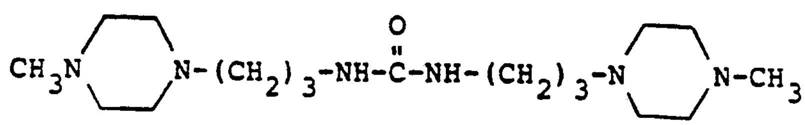

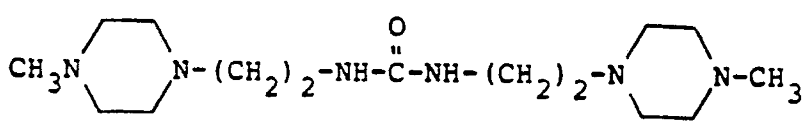

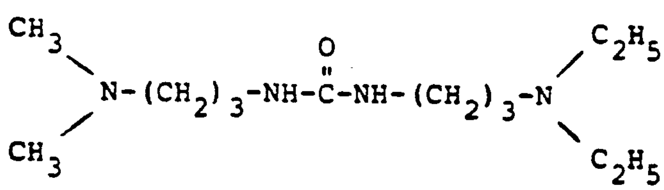

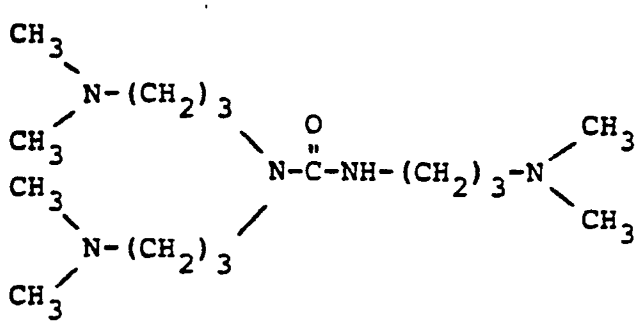

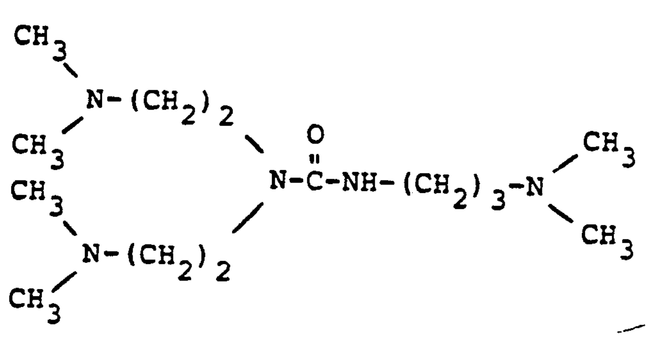

Die erfindungsgemäß einzusetzenden Katalysatoren, welche bevorzugt zwei Wasserstoffatome und besonders bevorzugt drei Wasserstoffatome an den Stickstoffatomen der Harnstoffgruppe besitzen, werden z.B. durch Umsetzung von Harnstoff mit den entsprechenden Aminen bei Temperaturen von 80—150°C, bevorzugt 100—130°C, durch Austreiben von Ammoniak hergestellt.

Als Ausgangsamine zur Synthese der erfindungsgemäß zu verwendenden Harnstoffe dienen z.B.

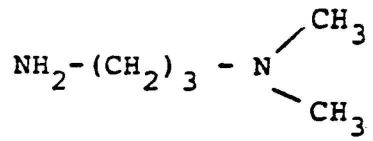

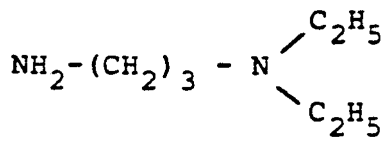

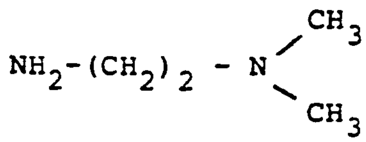

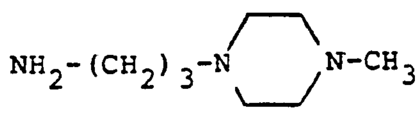

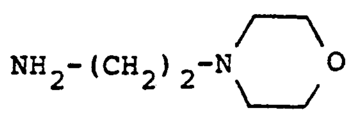

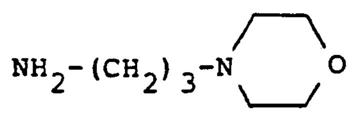

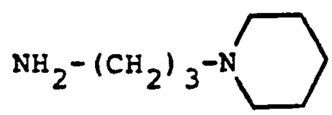

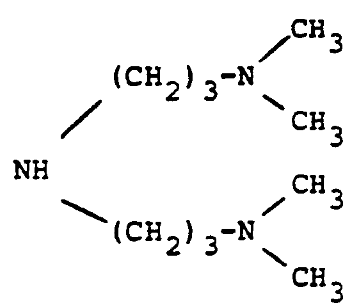

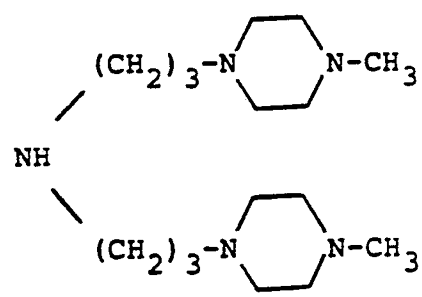

wobei das Umsetzungsverhältnis der Ausgangsamine zu Harnstoff 2:1 bis 1:1 ist. Vorzugsweise ist das Umsetzungsverhältnis 2:1, besonders bevorzugt 1:1.

Natürlich können auch Amingemische umgesetzt werden.

Für die Herstellung der Polyurethan schaumstoffe werden eingesetzt:

1. Als Ausgangskomponenten aliphatische, cycloaliphatische, araliphatische, aromatische und heterocyclische Polyisocyanate, wie sie z.B. von W. Siefken in Justus Liebigs Annalen der Chemie, 362, Seiten 75 bis 136, beschrieben werden, beispielsweise solche der Formel

$$Q(NCO)_n$$

in der

n = 2—4, vorzugsweise 2,

und

Q einen aliphatischen Kohlenwasserstoffrest mit 2—18, vorzugsweise 6—10 C-Atomen,
einen cycloaliphatischen Kohlenwasserstoffrest mit 4—15, vorzugsweise 5—10 C-Atomen,
einen aromatischen Kohlenwasserstoffrest mit 6—15, vorzugsweise 6—13 C-Atomen,
oder einen araliphatischen Kohlenwasserstoffrest mit 8—15, vorzugsweise 8—13 C-Atomen,

bedeuten, z.B. solche Polyisocyanate, wie sie in der DE—OS 2 832 253, Seiten 10—11, beschrieben werden.

Besonders bevorzugt werden in der Regel die technisch leicht zugänglichen Polyisocyanate, z.B. das 2,4- und 2,6-Toluylendiisocyanat sowie beliebige Gemische dieser Isomeren ("TDI") Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophenatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethylendiisocyanat ableiten.

2. Als Ausgangskomponenten ferner Verbindungen mit mindestens zwei gegenüber Isocyanaten reaktionsfähigen Wasserstoffatomen von einem Molekulargewicht in der Regel von 400—10.000. Hierunter versteht man neben Aminogruppen, Thiolgruppen oder Carboxylgruppen aufweisenden Verbindungen vorzugsweise Hydroxylgruppen aufweisende Verbindungen, insbesondere zwei bis acht Hydroxylgruppen aufweisende Verbindungen, speziell solche vom Molekulargewicht 1.000 bis 6.000, vorzugsweise 2.000 bis 6.000, z.B. mindestens zwei, in der Regel 2 bis 8, vorzugsweise aber 2 bis 6, Hydroxylgruppen aufweisende Polyester, Polyether, Polythiolether, Polyacetale, Polycarbonate und Polyesteramide, wie sie für die Herstellung von zellförmigen Polyurethanen an sich bekannt sind und wie z.B. in der DE—OS 2 832 253, Seiten 11—18, beschrieben werden.

3. Gegebenenfalls als Ausgangskomponenten Verbindungen mit mindestens zwei gegenüber Isocyanaten reaktionsfähigen Wasserstoffatomen und einem Molekülgewicht von 32 bis 400. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele hierfür werden in der DE—OS 2 832 253, Seiten 19—20, beschrieben.

4. Wasser und/oder leicht flüchtige organische Substanzen als Treibmittel.

5. Gegebenenfalls Hilfs- und Zusatzmittel wie

a) Katalysatoren der an sich bekannten Art in Mengen von bis zu 50 Gew.-%, bezogen auf die Mengen an erfindungsgemäß zu verwendenden Katalysatoren,

b) oberflächenaktive Zusatzstoffe, wie Emulgatoren und Schaumstabilisatoren,

c) Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Trischlorethylphosphat, Trikresylphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß- oder Schlämmkreide.

Diese gegebenenfalls mitzuverwendenden Hilfs- und Zusatzstoffe werden beispielsweise in der DE—OS 2 732 292, Seiten 21—24, beschrieben.

Weitere Beispiele von gegebenenfalls erfindungsgemäßen mitzuverwendenden oberflächenaktiven Zusatzstoffen und Schaumstabilisatoren sowie Zellreglern, Reaktionsverzögerern, Stabilisatoren, flammhemmende Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben, von Vieweg und Höchtlen, Carl-Hanser-Verlag, München 1966, z.B. auf den Seiten 103—113 beschrieben.

Zur Herstellung der Polyurethan-Verbundmaterialien bzw. der konfektionierten Polyurethane werden die erhaltenen Polyurethanschaumstoffe mit anderen Werkstoffen in an sich bekannter Weise verbunden.

Die Herstellung der Verbundmaterialien erfolgt gleichzeitig mit der Herstellung des Polyurethans, d.h.

nach der Hinterfüllungstechnik. Die Konfektionierung des Polyurethans, d.h. das Versehen mit einem Überzug aus Leder oder Textilien, erfolgt in der Regel nach seiner Herstellung nach an sich bekannten Verfahren.

Als andere Werkstoffe seien beispielsweise genannt: Folien aus Polyvinylchlorid in unterschiedlichen Farbtönen, Polyvinylacetat, ABS-Copolymerisate in unterschiedlichen Farbtönen, Kombinationen aus PVC und ABS, weitere Co- und Homopolymere auf der Basis von Vinylchlorid, Styrol, Butadien, Isopren, Chloropren, Dichlorbutadien, Ethylen, Propen, Acrylnitril, sowie deren Chlor- und Chlorsulfonierungsderivate. Die mit den erfindungsgemäß zu verwendenden Katalysatoren erhaltenen Polyurethanschaumstoffe, die weich, halbhart oder hart sein können, verhindern auch die Vergilbung von Textilien als Deckmaterialien, z.B. von Baumwollüberzügen und hellem Leder.

Durchführung des erfindungsgemäßen Verfahrens:

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-Patentschrift 2 764 565 beschrieben werden. Einzehlehtien über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1966, z.B. auf den Seiten 121—205, beschrieben.

Die Schaumstoffherstellung wird erfindungsgemäß in geschlossenen Formen durchgeführt. Dabei wird das Reaktionsgemisch in eine Form eingetragen. Als Formmaterial kommt Metall, z.B. Aluminium oder Kunststoff, z.B. Epoxidharz, in Frage. In der Form schäumt das schäumfähige Reaktionsgemisch auf und bildet den Formkörper. Die Formverschäumung kann dabei so durchgeführt werden, daß das Formteil an seiner Oberfläche eine Zellstruktur aufweist, sie kann aber auch so durchgeführt werden, daß das Formteil eine kompakte Haut und einen zelligen Kern aufweist. Erfindungsgemäß kann man in diesem Zusammenhang so vorgehen, daß man in die Form so viel schaumfähiges Reaktionsgemisch einträgt, daß der gebildete Schaumstoff die Form gerade ausfüllt. Man kann aber such so arbeiten, daß man mehr schaumfähiges Reaktionsgemisch in die Form einträgt, als zur Ausfüllung des Forminneren mit Schaumstoff notwendig ist. Im letztgenannten Fall wird somit unter "over-charging" gearbeitet; eine derartige Verfahrensweise ist z.B. aus den US-Patentschriften 3 178 490 und 3 182 104 bekannt.

Bei der Formverschäumung werden vielfach an sich bekannte "äußere Trennmittel", wie Siliconöle, mit verwendet. Man kann aber auch sogenannte "innere Trennmittel", gegebenenfalls im Gemisch mit äußeren Trennmitteln, verwenden, wie sie z.B. aus den DE-Offenlegungsschriften 2 121 670 und 2 307 589 bekanntgeworden sind.

Erfindungsgemäß ist oft bevorzugt, in konstant temperierter oder nicht beheizter Form geschäumte (kalthärtende) Formschaumstoffe herzustellen (vgl. GB-Patentschrift 1 162 517, DE—OS 2 153 086).

Die erfindungsgemäß erhältlichen, mit einem anderen Werkstoff Verbundenen oder konfektionierten Polyurethane finden z.B. Anwendung als Armaturentafel, Armlehnen, Autohimmel, Kühlmöbel, Liege- und Sitzmöbel, Matratzen, Kopfstützen, Sitze in Verkehrsmitteln wie Auto, Zug, Flugzeug.

Ausführungs- und Vergleichsbeispiele

1. Synthese von Harnstoffderivaten

A. 30,0 kg Harnstoff und 50,0 kg 3-Dimethylaminopropylamin werden unter Rühren auf 100°C erwärmt und $NH_3$ ausgetrieben, bis eine Temperatur von 115°C erreicht ist. Wenn die Gasabspaltung beendet ist, wird auf 80°C abgekühlt und bis zu einem Enddruck von 5 mbar im Vakuum behandelt.

Ausbeute: 71 kg, Viskosität: 5000 mPas (25°C)
Molgewicht durch Titration: 146
Analyse für $C_6H_{15}N_3O$ (145)
ber. C: 49,7; H: 10,3; N: 28,9;
gef. C: 50.0; H: 10.0; N: 28,1.

B. 120 g Harnstoff und 232 g N,N-Diethyl-1,2-ethandiamin werden auf 120°C erhitzt, bis kein $NH_3$ mehr austritt. Man legt bei 80°C Vakuum an, bis ein Enddruck von 5 mbar erreicht ist und kühlt ab.

Ausbeute: 310 g, Molgewicht durch Titration: 144,
ber. 159.

C. 120 g Harnstoff und 260 g N,N-Diethyl-1,3-propandiamin werden bis zur vollständigen $NH_3$-Abspaltung auf 120°C erhitzt, dann bei 80°C bis zu einem Enddruck von 5 mbar im Vakuum behandelt und ausgegossen.

Ausbeute: 335 g, Molgewicht durch Titration: 168,
ber. 173.

D. 120 g Harnstoff und 408 g 3-Dimethylaminopropylamin werden bis zur Beendigung der $NH_3$-Abspaltung auf 140°C erhitzt, wonach dann niederflüchtige Anteile im Vakuum bis zu einem Enddruck von 5 mbar abgezogen werden.

Ausbeute: 430 g, Titration der Molmasse: 238,
ber. 230, Viskosität 300 mPa.s (25°C).

E. 120 g Harnstoff und 520 g 1-Amino-3-diethylaminopropan werden bis zur Beendigung der $NH_3$-Abspaltung auf 120°C erhitzt, wonach niederflüchtige Anteile im Vakuum bis zu einem Enddruck von 5 mbar abgezogen werden.

Ausbeute: 555 g, Molmasse durch Titration: 275,
ber. 286.

F. 120 g Harnstoff und 464 g 1-Amino-2-diethylaminoethan werden bis zur Beendigung der $NH_3$-Abspaltung auf 140°C erhitzt, wonach dann niederflüchtige Anteile im Vakuum bis zu einem Enddruck von 5 mbar abgezogen werden.

Ausbeute: 490 g, Molmasse durch Titration: 250,
ber. 258.

2. Anwendungstechnische Prüfung der Harnstoffderivate im Lacktest

Auf Basis der nachstehenden Rezeptur wurden 4 1-Kasten-Polyurethanschaumstoff-Formteile bei 40°C Formtemperatur hergestellt. Auf diesen Formteilen wurden lackierte Holzbrettchen der Größe 70×100×10 mm mit der Lackseite auf dem Schaumstoff fixiert. Als Lack wurde ein handelsüblicher Nitrocellulose-Kombilack (NC-Lack) verwendet, der sehr häufig zur Lackierung der Sichtholzteile von Polstermöbeln eingesetzt wird. Die Probekörper wurden mehrere Tage bei 40°C gelagert und die Veränderungen registriert.

Der Praxisbezug ergibt sich bei lackierten Holzgestellen mit eingearbeiteten und konfektionierten Polyurethanformschaumteilen durch Dochtwirkung der Stoffe beim Transport des diffundierenden Katalysators auf die Lackteile.

Durch die gewählte Technik der direkten Schaumauflage des Lackteils wird die Schädigung lediglich schneller erfaßt bzw. im erfindungsgemäßen Sinn wirksame Katalysatoren unter drastischen Bedingungen geprüft.

| Rezeptur | I | II | III | IV | V | VI |
|---|---|---|---|---|---|---|
| Trifunktioneller Polyether der OH-Zahl 56, welcher durch Addition von PO/EO (87:13) an Trimethylolpropan erhalten wurde. | 100 | 100 | 100 | 100 | 100 | 100 |
| Wasser | 3,0 | 3,0 | 3,0 | 3,0 | 3,0 | 3,0 |
| Handelsüblicher Siloxan-Stabilisator der Goldschmidt AG | 1,0 | 1,0 | 1,0 | 1,0 | 1,0 | 1,0 |
| Triethylamin | 1,5 | — | — | — | — | — |
| Tetramethylhexamethylendiamin | — | 0,8 | — | — | — | — |
| Dicyclohexylmethylamin | — | — | 3,0 | — | — | — |
| Aktivator gemäß A | — | — | — | 1,6 | — | — |
| Aktivator gemäß B | — | — | — | — | 1,7 | — |
| Dimethylaminopropylformamid (nicht erfindungsgemäß) | — | — | — | — | — | 1,6 |

werden mit jeweils 35,2 Teilen eines Isocyanates mit dem NCO-Gehalt von 44,5%, bestehend aus 80% eines Gemischs aus 2,4- und 2,6-Toluylendiisocyanat (80:20) und 20% eines Polyphenylpolymethylenpolyisocyanates, das durch Phosgenierung eines Anilin-Formaldehyd-Kondensats gewonnen wurde, vermischt und in die Form gegossen.

Ergebnisse des Lacktests

| Lagerung der Proben: | 144 Stunden bei 40°C | | | | | |
|---|---|---|---|---|---|---|
| Formteil | I | II | III | IV | V | VI |
| Lackvergilbung | 2 | 3 | 3 | 1 | 1 | 4 |
| Lackerweichung | 2 | 2 | 1 | 1 | 1 | 4 |
| Beurteilungsmaßstab: | 1. völlig unverändert, der Nullprobe entsprechend,<br>2. geringe Veränderung<br>3. mittelstarke Veränderung<br>4. starke Veränderung. | | | | | |

Die Katalysatoren wurden in den Beispielen I bis VI in unterschiedlichen Mengen, entsprechend ihrer aktivierenden Wirkung, eingesetzt.

Aus den Beispielen der Rezepturen von Formteilen nach IV und V geht die erfindungsgemäße Überlegenheit bezüglich der Kontaktverfärbung eindeutig hervor, wie sie nur mit den Harnstoffderivaten gemäß A und B erreicht wird, dies selbst unter drastischen Bedingungen direkter Lackauflage.

3. Anwendungstechnische Prüfungen von durch halbharte Polyurethanschaumfstoffe hinterschäumten PVC-Folien

Zur Hinterschäumung dienten folgende Polyurethan-Rohstoffe:

90 g eines Polyethers vom Molekulargewicht 4800, der durch Anlagerung von Propylenoxid (87%) und Ethylenoxid (13%) an Trimethylolpropan erhalten wurden, 2,5 g Wasser, 2 g Tallöl und 0,4 g der nachstehend aufgeführten Aktivatoren wurden mit 47 g eines Polyphenylpolymethylen-polyisocyanats, das durch Phosgenierung eines Anilin-Formaldehyd-Konsates erhalten wurde und einen NCO-Gehalt von 31 Gew.-% aufweist, vermischt und in die Form eingetragen.

Verfahrensweise

Eine nicht eingefärbte, handelsübliche, ca. 0,7 mm dicke PVC-Folie wird in ein temperierbares Plattenmetallwerkzeug der Größe 20 × 20 × 4 cm eingelegt und rückseitig maschinell mit der oben angegebenenen Rohstoffmischung hinterfüllt. Nach einer Reaktions- und Aushärtezeit von 5 Min. wird entformt.

Die erhaltenen Formteile werden bei 120°C im Umlufttrockenschrank separat getempert, wobei folgende Ergebnisse erhalten wurden:

| Aktivatoren | 8 h | 18 h bei 120°C |
|---|---|---|
| | Farbveränderung | |
| 1. Diaza-bicyclo-2,2,2-octan | sehr stark verfärbt | totale Verfärbung |
| 2. 2,2'-Dimethylamino-diethylether | rötlich verfärbt | sehr stark verfärbt |
| 3. Aktivator gemäß A | keine Verfärbung | sehr leichte Verfärbung |
| 4. Aktivator gemäß D | keine Verfärbung | sehr leichte Verfärbung |
| 5. Dimethylaminopropyl-formamid (nicht erfindungsgemäß) | mittelstarke Verfärbung | sehr starke Verfärbung |
| PVC-Folie, farblos (Vergleichsprüfung) | keine Verfärbung | leichte Verfärbung |

Eindeutig wird auch hier die Verhinderung einer Kontaktverfärbung durch die mit den erfindungsgemäß zu verwendenden Harnstoffderivaten aktivierten, halbharten Schaumstoffen belegt.

Bei eingefärbten Folien werden die auftretenden Farbveränderungen erst nach wesentlich längeren Zeiträumen sichtbar.

Bei der analogen Hinterschäumung einer blau eingefärbten, für Autoarmaturen verwendeten 0,7 mm dicken PVC-Folie, werden durch Tempern bei 120°C folgende Ergebnisse erhalten:

| Aktivatoren | 72 h | 168 h | 288 h | 336 h | 504 h |
|---|---|---|---|---|---|
| 1. Diaza-bicyclo-2,2,2-octan | schwarz | schwarz | schwarz | schwarz | schwarz |
| 2. 2,2'-Dimethylaminodiethylether | blau-schwarz | blau-schwarz | schwarz | schwarz | schwarz |
| 3. Aktivator gemäß A | blau | blau | blau | blau | überwiegend blau |
| 4. Aktivator gemäß D | blau | blau | blau | blau | überwiegend blau |
| 5. Dimethylaminopropyl-formamid (nicht erfindungsgemäß) | blau-schwarz | schwarz | schwarz | schwarz | schwarz |
| blaue PVC-Folie (Vergleichsprüfung) | blau | * | | | |

* Die Folie wird ab hier von silberfarbenen Inseln überzogen, die blaue Grundfarbe bleibt erhalten. Diese Erscheinung tritt jedoch nicht mit den erfindungsgemäß zu verwendenden Aktivatoren auf.

Auch bei der blau eingefärbten, hinterschäumten PVC-Folie wird mit den erfindungsgemäß zu verwendenden Harnstoffen gemäß A und D eine sonst auftretende Kontaktverfärbung der Folie verhindert sowie eine Zusatzstabilisierung bewirkt.

Die beschriebenen Effekte treten sogar bei tiefen Temperaturen auf. Aus diesem Grund sind die Einfassungen von Kühltruhen, die größtenteils aus PVC gefertigt werden, oft eingefärbt, um dem Nachteil einer Kontaktverfärbung zu entgehen.

**Patentansprüche**

1. Verfahren zur Herstellung von Polyurethanformschaumstoffen, die in direktem Oberflächenkontakt mit einem weiteren Werkstoff stehen, durch Umsetzung von mindestens zwei gegenüber Isocyanaten reaktionsfähige Wasserstoffatome aufweisenden Verbindungen vom Molekulargewicht 400—10.000 mit Polyisocyanaten in Gegenwart von tertiäre Aminogruppen aufweisenden Katalysatoren sowie Wasser und/oder organischen Treibmitteln und gegebenenfalls in Gegenwart von Kettenverlängerungsmitteln von Molekulargewicht 32—400, Schaumstabilisatoren, und weiteren Hilfs- und Zusatzmitteln in einer geschlossenen Form und Verbindung oder Konfektionierung des erhaltenen Polyurethanschaumstoffs mit einem weiteren Werkstoff, dadurch gekennzeichnet, daß man als Katalysatoren diffusionsstabile Aminoalkylharnstoffe der allgemeinen Formel

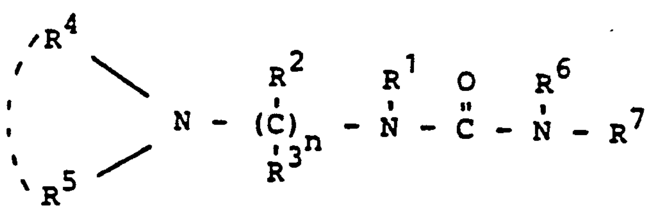

in der

$R^1$ Wasserstoff

n eine ganze Zahl zwischen 2 und 6,

$R^2$, $R^3$ Wasserstoff oder einen $C_1$—$C_6$-Alkylrest,

$R^4$, $R^5$ einen $C_1$—$C_6$-Alkylrest oder zusammen einen $C_2$—$C_6$-Alkylenrest, der Heteroatome wie

O oder 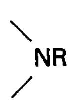

(R = Alkyl) enthalten kann,

$R^6$, $R^7$ gleich oder verschieden sind und Wasserstoff oder den Rest bedeuten,

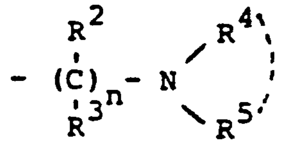

verwendet, wobei die Verbindung des Polyurethanschaumstoffs mit einem weiteren Werkstoff nach der Hinterfüllungstechnik erfolgt und im Falle einer Konfektionierung der Polyurethanschaumstoff mit einem Überzug aus Leder oder Textilien versehen wird.

2. Verfahren gemäß Anspruch 1, dadurch gekennzeichnet, daß als weiterer Werkstoff PVC, ABS, Mischungen aus PVC, ABS, Polyvinylacetat, Polyvinylbutyral, ferner Co- und Homopolymerisate auf der Basis von Vinylchlorid, Styrol, Butadien, Isopren, Chloropren, Dichlorbutadien, Ethylen, Propen oder Acrylnitril und deren Chlor- und Chlorsulfonierungsderivate in Form von Folien, Textilien auf der Basis von Baumwolle oder Leder verwendet werden.

3. Verfahren gemäß Anspruch 1 und 2, dadurch gekennzeichnet, daß in der allgemeinen Formel $R^1$, $R^2$, $R^3$ und $R^7$ Wasserstoff, $R^4$ und $R^5$ Methyl und n eine ganze Zahl von 2 oder 3 bedeuten.

4. Verfahren gemäß Anspruch 1 bis 3, dadurch gekennzeichnet, daß als Katalysator die Verbindungen

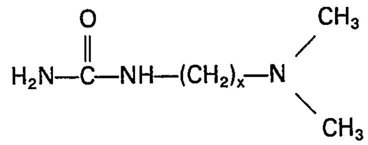

x = 2 oder 3 verwendet werden.

5. Verfahren gemäß Anspruch 1 oder 2, dadurch gekennzeichnet, daß als Katalysator die Verbindung

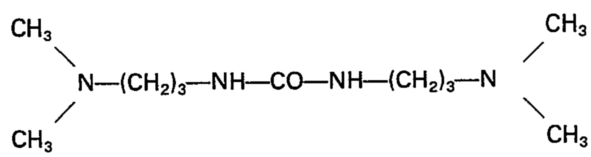

verwendet wird.

6. Verfahren gemäß Anspruch 1 oder 2, dadurch gekennzeichnet, daß als Katalysator die Verbindung

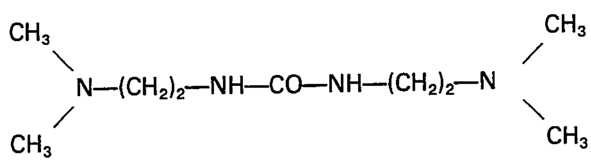

verwendet wird.

7. Verfahren gemäß Anspruch 1 oder 2, dadurch gekennzeichnet, daß als Katalysator die Verbindung

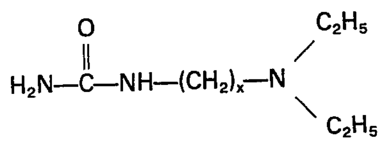

verwendet wird.

**Revendications**

1. Procédé de production de mousses moulées de polyuréthanne, qui sont en contact direct de surface avec un autre matériau, par réaction de composés présentant au moins deux atomes d'hydrogène aptes à réagir vis-à-vis d'isocyanates, d'un poids moléculaire de 400 à 10 000, avec des polyisocyanates en présence de catalyseurs présentant des groupes amino tertiaires, ainsi que d'eau et/ou d'agents porogènes organiques et, le cas échéant, en présence d'agents d'allongement de chaîne d'un poids moléculaire de 32 à 400, d'agents de stabilisation de la mousse et d'autres substances auxiliaires et additifs dans un moule fermé, et liaison et confection de la mousse de polyuréthanne obtenue avec un autre matériau, caractérisé en ce qu'on utilise comme catalyseurs des amino-alkylurées stables à la diffusion, de formule générale

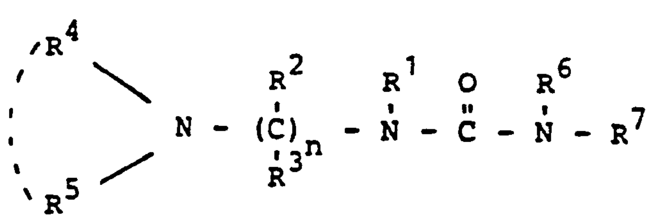

dans laquelle

$R^1$ est l'hydrogène

*n* est un nombre entier ayant une valeur entre 2 et 6,

$R^2$, $R^3$ représentent l'hydrogène ou un reste alkyle en $C_1$ à $C_6$,

$R^4$, $R^5$ représentent un reste alkyle en $C_1$ à $C_6$ ou forment ensemble un reste alkylène en $C_2$ à $C_6$ qui peut contenir des hétéro-atomes tels que 0 ou >NR (R = alkyle),

$R^6$, $R^7$ sont identiques ou différents et représentent l'hydrogène ou le reste

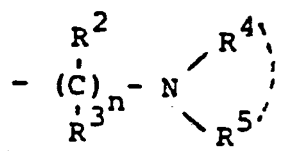

la liaison de la mousse de polyuréthanne avec un autre matériau étant effectuée d'après la technique de garnissage à la face postérieure et, dans le cas d'une confection, la mousse de polyuréthanne est munie d'un revêtement de cui ou de matières textiles.

2. Procédé suivant la revendication 1, caractérisé en ce qu'on utilise comme autre matériau du PVC, de l'ABS, des mélanges de PVC, d'ABS, d'un polymère d'acétate de vinyle, d'un polyvinylbutyral, en outre des copolymérisats et homopolymérisats à base de chlorure de vinyle, de styrène, de butadiène, d'isoprène, de chloroprène, de dichlorobutadiène, d'éthylène, de propène ou d'acrylonitrile et leurs dérivés de chloration et de chlorosulfonation sous forme de feuilles, des matières textiles à base de coton, ou du cuir.

3. Procédé suivant les revendications 1 et 2, caractérisé en ce que, dans la formule générale,

$R^1$, $R^2$, $R^6$ et $R^7$ représentent l'hydrogène,

$R^4$ et $R^5$ sont des groupes méthyle et

*n* est un nombre entier ayant la valeur 2 ou 3.

4. Procédé suivant les revendications 1 à 3, caractérisé en ce qu'on utilize comme catalyseur les composés

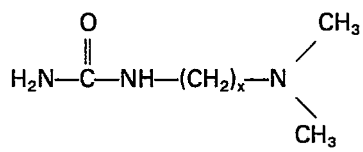

dans lesquels *x* a la valeur 2 ou 3.

5. Procédé suivant la revendication 1 ou 2, caractérisé en ce qu'on utilise comme catalyseur le composé

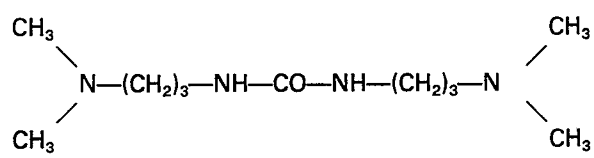

6. Procédé suivant la revendication 1 ou 2, caractérisé en ce qu'on utilise comme catalyseur le composé

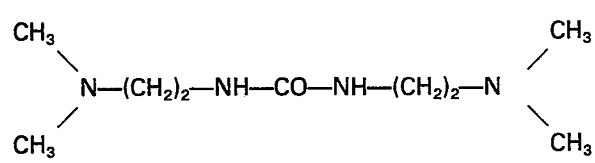

7. Procédé suivant la revendication 1 ou 2, caractérisé en ce qu'on utilise comme catalyseur le composé

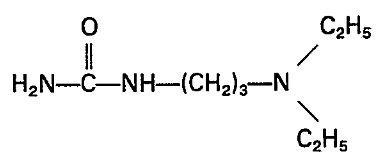

**Claims**

1. A process for the production of moulded polyurethane foams, which are in direct contact with another material, by reaction of compounds containing at least two isocyanate-reactive hydrogen atoms

and having a molecular weight in the range from 400 to 10,000 with polyisocyanates in the presence of catalysts containing tertiary amino groups, water and/or organic blowing agents and optionally in the presence of chain-extending agents having a molecular weight of 32 to 400, foam stabilizers and other auxiliaries and additives in a closed mould and combination or making up of the polyurethane foam obtained with another material, characterized in that the catalysts used are diffusion-stable aminoalkyl ureas corresponding to the following general formula

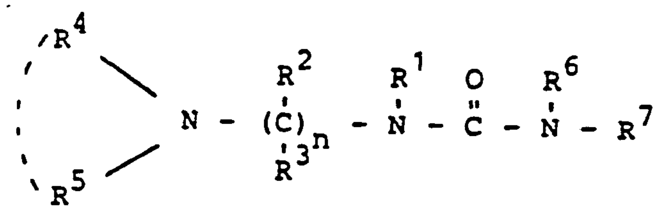

in which
$R^1$ represents hydrogen,
n is an integer of 2 to 6,
$R^2$, $R^3$ represent hydrogen or a $C_{1-6}$ alkyl radical,
$R^4$, $R^5$ represent a $C_{1-6}$ alkyl radical or together form a $C_{2-6}$ alkylene radical which may contain hetero atoms, such as O or NR
(R = alkyl), $R^6$, $R^7$ may be the same or different and represent hydrogen or the group

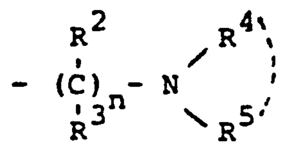

combination of the foam with another material being carried out by the back-filling technique and, in the case of making up, the polyurethane foam being provided with a covering of leather or textiles.

2. A process as claimed in claim 1, characterized in that PVC, ABS, mixtures of PVC, ABS, polyvinyl acetate, polyvinyl butyral; co- and homopolymers based on vinyl chloride, styrene, butadiene, isoprene, chloroprene, dichlorobutadiene, ethylene, propene or acryonitrile and chlorination or chlorosulfonation derivatives thereof in the form of films, textiles based on cotton or leather are used as the other material.

3. A process as claimed in claims 1 and 2, characterized in that, in the general formula,
$R^1$, $R^2$, $R^3$, $R^6$ and $R^7$ represent hydrogen,
$R^4$ and $R^5$ are methyl and
n is an integer of 2 or 3.

4. A process as claimed in claims 1 to 3, characterized in that compounds corresponding to the formula

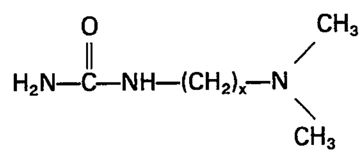

x = 2 or 3, are used as catalysts.

5. A process as claimed in claim 1 or 2, characterized in that a compound corresponding to the following formula

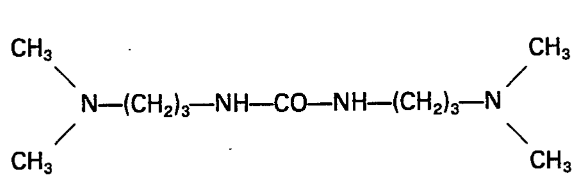

is used as catalyst.

6. A process as claimed in claim 1 or 2, characterized in that a compound corresponding to the following formula

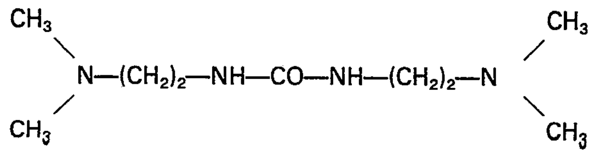

is used as catalyst.

7. A process as claimed in claim 1 or 2, characterized in that a compound corresponding to the following formula

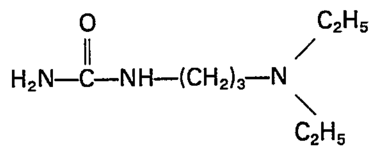

is used as catalyst.